# DEMANDE DE BREVET EUROPEEN

(11) **EP 4 169 601 A1**
(43) Date de publication de la demande: **26.04.2023**
(21) Numéro de dépôt: 21306478.5
(22) Date de dépôt: 22.10.2021
(51) Int. Cl.: B01D 53/04, B01D 46/10, B01D 46/12, B01D 46/00, B01D 46/64

(54) **DISPOSITIF DE TRAITEMENT DE L'AIR À TURBINE**

(71) Demandeur: Trichereau Sébastien Bernard Jean, 91120 Palaiseau (FR)
(72) Inventeur: La désignation de l'inventeur n'a pas encore été déposée
(74) Mandataire: Gauchet, Fabien Roland

(57) **Abrégé**

L'invention concerne un dispositif de traitement de l'air à turbine (21), comprenant d'une part des moyens de traitement physiques (11) et chimiques (13, 15) de l'air, et d'autre part une cartouche amovible de captation du dioxyde de carbone (27).

## Description

La présente invention se rapporte au domaine du traitement de l'air en vue de réaliser sa dépollution.

La question de la qualité de l'air notamment dans les espaces confinés tels que les appartements ou les bureaux devient aujourd'hui un vrai sujet de santé publique.

En effet, l'air respiré dans les milieux confinés est chargé de microbes, de particules fines et de composés chimiques nocifs pour la santé.

Parmi les composés chimiques nocifs, on répertorie notamment les composés organiques volatils (COV) tels que les formaldéhydes, ainsi que les oxydes d'azote et le dioxyde de carbone.

Les composés organiques volatils proviennent notamment des solvants utilisés pour les colles et peintures, sur les murs, sous la moquette, dans l'ameublement, etc.

Un certain nombre d'appareils de traitement de l'air existent sur le marché, avec une efficacité variable vis-à-vis des différents agents polluants.

On ne trouve cependant pas d'appareil permettant de traiter de manière efficace la pollution au dioxyde de carbone, provenant notamment de la présence simultanée de plusieurs individus dans la même pièce.

La respiration de ces individus engendre en effet une quantité non négligeable de dioxyde de carbone, dont on a pu prouver qu'au-delà d'un certain seuil, elle était nocive à l'activité humaine.

Plus précisément, alors que le taux du dioxyde de carbone dans l'air extérieur est de l'ordre de 400 ppm, il peut atteindre des pics de quelques milliers de ppm dans une chambre à coucher de deux personnes d'environ 13 m², avec la porte fermée.

Or, on a pu montrer qu'au-delà de 1200 ppm de dioxyde de carbone, l'attention et les facultés cognitives d'un individu sont susceptibles de baisser.

Il existe donc un vrai besoin de traitement du dioxyde de carbone par les purificateurs d'air, qui soit compatible avec une grande simplicité d'utilisation.

On atteint cet objectif avec un dispositif de traitement de l'air à turbine, comprenant d'une part des moyens de traitement physiques et chimiques de l'air, et d'autre part une cartouche amovible de captation du dioxyde de carbone.

Cette cartouche amovible permet de réduire le taux de dioxyde de carbone de l'air traité, et peut-être aisément changée lorsque le matériau de captation est saturé.

Dans le cadre de la présente invention, les termes « cartouche amovible » désignent tout type de module de captation du dioxyde de carbone pouvant être remplacé par un module de rechange une fois qu'il est saturé de dioxyde de carbone.

Suivant des caractéristiques optionnelles du dispositif selon invention, prises seules ou en combinaison :

- lesdits moyens de traitement physique et chimique de l'air comprennent des filtres disposés de manière concentrique ou successive, ladite turbine est disposée à la sortie du volume cylindrique défini par ces filtres et ladite cartouche amovible est disposée en aval de ladite turbine : cet agencement permet un traitement particulièrement efficace de l'air, avec le minimum de perte de charge ; il permet en outre de rendre très accessible la cartouche amovible de captation de dioxyde de carbone, et d'en faciliter le changement ;

- ledit dispositif comporte un ventilateur adjacent à la cartouche, apte à prélever une partie du débit engendré par ladite turbine : ce ventilateur permet d'orienter activement une partie du débit d'air vers la cartouche de captation du dioxyde de carbone ;

- lesdits moyens de traitement physique de l'air comprennent au moins un filtre à particules : un tel filtre permet de supprimer les particules fines présentes dans l'air, c'est-à-dire typiquement les particules micrométriques ;

- lesdits moyens de traitement chimique de l'air comprennent au moins un filtre à matériau adsorbant : un tel filtre permet typiquement d'oxyder des molécules nocives pour la santé, tels que les composés organiques volatils, et en particulier les formaldéhydes, le dioxyde de carbone, les oxydes d'azote ;

― ledit/lesdits matériaux adsorbant(s) peut(peuvent) être sélectionné(s) dans le groupe comprenant les adsorbants carbonés, les oxydes inorganiques, les polymères ;

- ledit dispositif comprend au moins deux filtres à matériaux adsorbants disposés de manière concentrique ou successive : la présence de ces deux filtres permet de cumuler les propriétés oxydantes de chacun des matériaux adsorbants ;

- ledit dispositif comprend des moyens de génération de plasma disposés à l'intérieur ou à proximité ou en contact dudit filtre à matériau adsorbant : ces moyens de génération de plasma permettent de régénérer le matériau adsorbant du filtre et de contribuer à l'oxydation des molécules nocives, et en particulier des composés organiques volatils ;

- ledit dispositif comprend au moins une source émettrice de rayons ultraviolets : une telle source, qui peut être par exemple formée par des diodes électroluminescentes (LEDs) émettrices de rayons ultra-violets, permet de supprimer la pollution microbienne de l'air traité ;

- ledit dispositif comprend un superviseur électronique connecté à ladite turbine, audit ventilateur, auxdits moyens de génération de plasma et à une pluralité de capteurs de mesure de la qualité de l'air sortant dudit dispositif: ce superviseur électronique permet notamment de régler les vitesses de la turbine et du ventilateur du dispositif, et de déclencher les moyens de génération de plasma de manière à permettre une qualité constante de traitement de l'air.

D'autres caractéristiques et avantages de l'invention ressortiront à la lecture de la description qui suit, en référence aux figures annexées, qui illustrent :
[Fig. 1] : une vue en coupe axiale du dispositif selon invention ;
[Fig. 2] : une vue en coupe transversale du dispositif selon invention ;
[Fig. 3] : une vue de détail en coupe axiale de la cartouche de captation du dioxyde de carbone dispositif selon invention ; et
[Fig. 4] : un schéma de principe indiquant les interactions entre les différents composants du dispositif selon invention.

Pour plus de clarté, des éléments identiques ou similaires sont repérés par des signes de référence identiques ou similaires sur l'ensemble des figures.

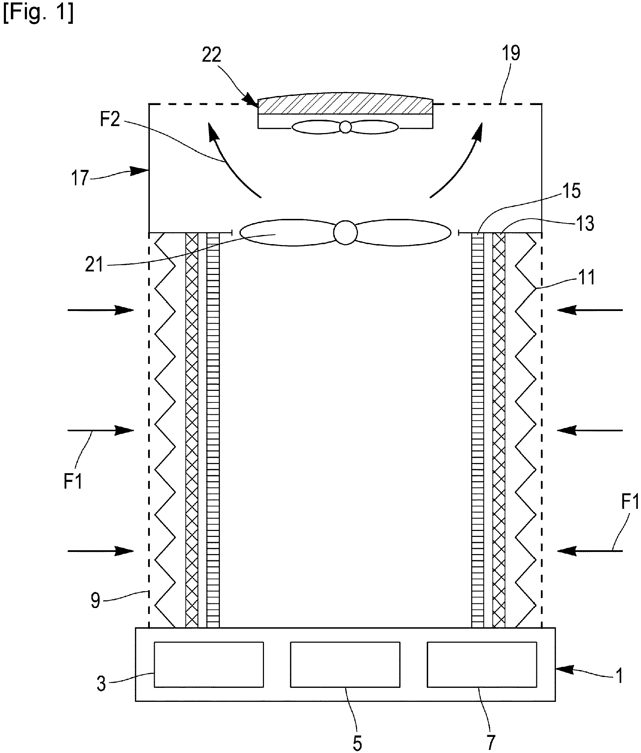

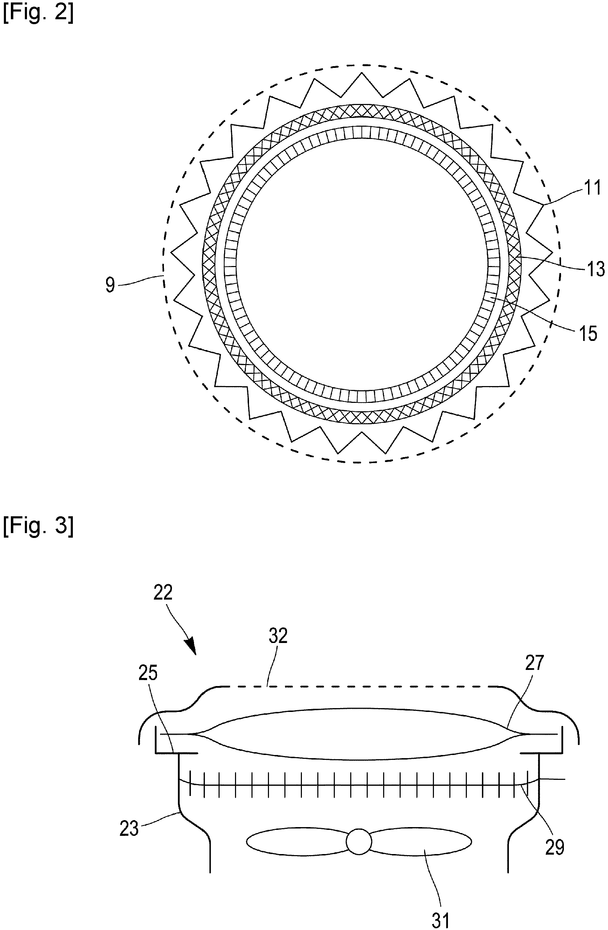

On se reporte à présent aux figures 1 et 2, sur lesquelles on peut voir que le dispositif de traitement de l'air selon invention comprend un socle 1 de forme générale circulaire, renfermant différents composants électriques et électroniques, tels qu'une alimentation électrique 3 destinée à être reliée au secteur, un circuit électronique 5 et un module 7 comprenant des capteurs de mesure de la qualité de l'air.

L'alimentation électrique 3 permet en particulier d'engendrer une haute tension à destination notamment du générateur de plasma (voir plus bas).

Ce module 7 peut être conçu de manière à pouvoir être remplacé aisément (système de type « plug-and-play »), et peut comprendre par exemple des capteurs de composés organiques volatils (COV), de dioxyde de carbone, de monoxydes d'azote, de température, d'humidité, de pression,...

Sur le socle sont montés de manière concentrique, et de l'extérieur vers l'intérieur : une grille de protection 9, un filtre à particules 11, un premier filtre chimique 13, et un second filtre chimique 15. En variante, ces éléments pourraient être disposés de manière axiale, à la suite les uns des autres.

Comme cela est visible sur la figure 2, cette grille et ces filtres présentent une section sensiblement circulaire, et sont emboîtés sur le socle 1 grâce à une coopération mécanique appropriée, tels qu'un engagement dans une ou plusieurs rainures circulaires formées dans ce socle.

La grille de protection 9 peut être formée en métal ou en matière plastique.

Le filtre à particules 11 peut être réalisé avec des fibres permettant de piéger les particules fines contenues dans l'air dont les dimensions sont supérieures à une valeur prédéterminée, typiquement de l'ordre de grandeur du micron.

De manière alternative ou complémentaire, le filtre 11 pourrait être remplacé/complété par un filtre à précipitation électrostatique.

Les premiers 13 et second 15 filtres chimiques sont adaptés pour piéger les composés organiques volatils (COV) tels que les formaldéhydes, une partie du dioxyde de carbone, ainsi que les oxydes d'azote.

Typiquement, ces filtres chimiques comprennent des matériaux adsorbants tels que des zéolithes ou des silices ou oxydes revêtus de zéolithes, permettant de catalyser les réactions d'oxydation des composés susmentionnés.

De manière alternative ou complémentaire, ces filtres chimiques pourraient être remplacés en tout ou partie ou complétés par des moyens de traitement par photocatalyse, comprenant des sources émettrices de rayonnement ultra-violet, en combinaison avec un photocatalyseur tel que le TiO₂.

Avantageusement, des générateurs de plasma tels que des lampes (non représentées) sont disposés à l'intérieur de ces filtres chimiques ou à proximité immédiate ou en contact, permettent de favoriser cette catalyse, ainsi que de régénérer les matériaux adsorbants.

Ces générateurs de plasma peuvent se présenter sous la forme de tubes parallèles à la direction axiale des filtres 13, 15, ou bien de tubes de forme sensiblement circulaire répartis sur toute la longueur de ces filtres. Ces générateurs de plasma peuvent être cylindriques ou planes ou mixtes, et permettre des décharges électriques surfaciques ou volumiques.

D'autres matériaux adsorbants peuvent être utilisés, selon la nature des composés que l'on souhaite traiter.

A titre d'exemple illustratif et non limitatif, on peut recourir à des adsorbants carbonés (charbons actifs, fibres de carbone,...), à des oxydes organiques (alumine...), à des polymères (polymères styréniques réticulés...).

De manière optionnelle et avantageuse, le dispositif de traitement de l'air selon invention peut également comprendre une ou plusieurs sources de rayons ultra-violets (non représentées) telles que des LEDs émettrices d'ultra-violets, disposées à l'intérieur du volume défini par les filtres 13, 15, permettant le traitement antimicrobien (virus, bactéries, pollens...) de l'air.

En complément des filtres susmentionnés, on peut prévoir que le dispositif de traitement de l'air selon l'invention comprenne des moyens d'ionisation de l'air.

Le dispositif selon invention comprend par ailleurs un couvercle creux 17 fermé par une grille supérieure 19, à l'intérieur duquel est monté une turbine 21, connectée électriquement au circuit électronique 5.

Au centre de la grille supérieure 19 est monté un module de traitement/adsorption du dioxyde de carbone 22, représenté de manière plus détaillée à la figure 3.

Comme on peut le voir sur cette figure, ce module 22 comprend une cheminée 23 munie d'un épaulement circulaire 25 sur lequel peut reposer une cartouche de captation du dioxyde de carbone 27.

Sous cette cartouche de captation 27 se trouve une grille de support 29, en dessous de laquelle se trouve un ventilateur 31 connecté électriquement au circuit électronique 5.

Un capot ajouré amovible 32 est apte à fermer une cheminée 23, de manière à emprisonner la cartouche de captation 27.

Les matériaux pouvant être utilisés à l'intérieur de la cartouche 27 afin de réaliser la captation du dioxyde de carbone peuvent être par exemple : des matériaux adsorbants à base d'oxyde de calcium qui peuvent former des carbonates en présence de dioxyde de carbone.

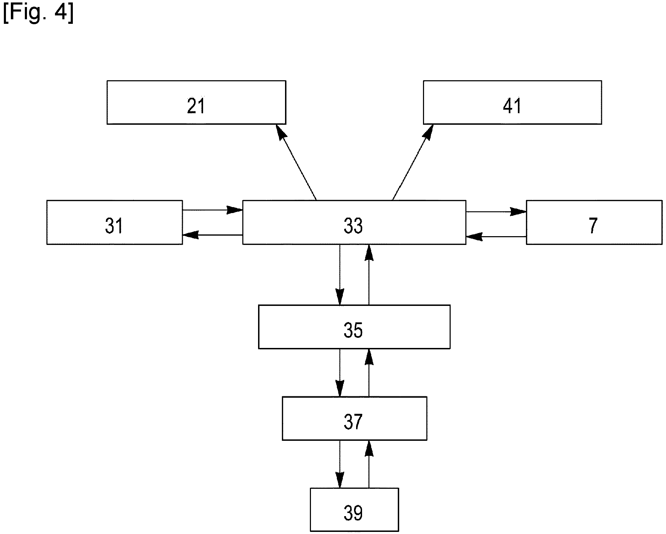

On se reporte à présent à la figure 4, sur laquelle on a représenté de manière schématique les différents composants électriques et électroniques du dispositif de traitement de l'air selon invention, et les relations qui existent entre ces composants.

Le circuit électronique 5 comprend notamment un microcontrôleur 33 et des moyens de communication 35 filaires ou non, aptes à communiquer avec un serveur extérieur 37, lui-même apte à communiquer avec des applications 39 installées sur des terminaux tels que des Smartphones.

Le microcontrôleur 33 est apte à communiquer avec le module 7 de capteurs de mesure de la qualité de l'air.

Ce microcontrôleur 33 est par ailleurs connecté électriquement à une carte 39 de gestion de l'alimentation haute tension 3, ainsi qu'à la turbine 21 et au ventilateur 31.

Le mode de fonctionnement et les avantages du dispositif du traitement de l'air selon invention résultent directement de la description qui précède.

Ce dispositif peut être posé à l'intérieur d'une pièce, ou bien intégré à un système de ventilation tel qu'une CTA (centrale de traitement de l'air) ou une VMC (ventilation mécanique contrôlée).

L'air de la pièce à traiter traverse radialement la grille de protection 9 sous l'action de l'aspiration engendrée par la turbine 21, comme indiqué par les flèches F1.

L'air est ainsi amené à traverser le filtre à particules 11 ainsi que le premier 13 et second 15 filtres chimiques, subissant ainsi les différents types de dépollutions associées à chacun de ces filtres.

Lorsque des générateurs de plasma sont prévus, ils peuvent être allumés par intermittence par le microcontrôleur 33, de manière à optimiser l'efficacité de la catalyse et la consommation électrique.

Lorsqu'une ou plusieurs sources d'ultraviolets sont prévues, elles peuvent être allumées en permanence, ou bien par intermittence, sous l'action du microcontrôleur 33.

L'air aspiré radialement par la turbine 21 est ensuite expulsé axialement vers l'extérieur du dispositif selon l'invention, à travers le couvercle creux 17 et la grille supérieure 19, comme indiqué par les flèches F2.

Les différents capteurs de mesure de la qualité de l'air situés à l'intérieur du module 7 permettent notamment de détecter le degré d'encrassement des filtres 11, 13, 15, et d'envoyer des signaux au microcontrôleur 33 permettant par exemple, via le serveur 37 et une application 39 installée sur un Smartphone, de prévenir un utilisateur de la nécessité de changer un ou plusieurs filtres.

On peut prévoir différents algorithmes programmés dans le micro-contrôleur 33 permettant, en fonction des différents signaux reçus, de déclencher telle ou telle action : marche/arrêt de la turbine 21 et du ventilateur 31, marche/arrêt des sources d'ultra-violets, du générateur de plasma, etc.

On peut aussi prévoir que le micro-contrôleur 33 soit mis en relation, via le serveur 37, à des bases de données telles que des données représentatives de la qualité de l'air en ville, et qu'il déclenche certaines actions en fonction des données ainsi reçues.

Le capteur de dioxyde de carbone situé à l'intérieur du module 7 permet de faire fonctionner en tant que de besoin le ventilateur 31.

Plus précisément, lorsqu'une teneur en dioxyde de carbone de l'air, mesurée par le capteur situé à l'intérieur du module 7, dépasse un seuil prédéterminé, le microcontrôleur 33 déclenche la mise en route du ventilateur 31.

Ce faisant, une partie du flux d'air F2 est dirigée par le ventilateur 31 à travers la cartouche de captation du dioxyde de carbone 27, permettant de réduire la teneur en dioxyde de carbone de l'air.

Lorsque le module 7 envoie au microcontrôleur 33 un signal indiquant que la cartouche 27 est encrassée, il convient de la changer : pour cela, l'utilisateur soulève le capot ajouré 32, et remplace la cartouche.

Comme on peut le comprendre à la lumière de ce qui précède, le dispositif de traitement de l'air selon invention permet de résoudre de manière très simple le problème de la pollution de l'air au dioxyde de carbone.

Les cartouches de captation du dioxyde de carbone peuvent être aisément remplacées/reconditionnées.

La configuration concentrique des filtres 11, 13, 15, et leur simple emboîtement dans le socle 1 et dans le couvercle 17 permettent également leur remplacement de manière simple : il suffit en effet de soulever le couvercle 17, et de retirer le ou les filtres encrassés, indépendamment les uns des autres.

Le remplacement de ces filtres 11, 13, 15 s'effectuera en général à une fréquence inférieure au remplacement de la cartouche 27.

On notera par ailleurs que cette configuration concentrique permet une perte de charge limitée, et donc une faible consommation électrique du dispositif de traitement de l'air selon invention.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

C'est ainsi par exemple que la cartouche amovible de captation du dioxyde de carbone pourrait se présenter sous la forme d'un ou plusieurs filtres supplémentaires (par exemple en non-tissé, en nids d'abeilles) supportant le matériau d'adsorption du dioxyde de carbone, disposé(s) de manière concentrique avec les autres filtres du dispositif, par exemple radialement à l'intérieur du filtre 15.

## Revendications

1. Dispositif de traitement de l'air à turbine (21), comprenant d'une part des moyens de traitement physiques (11) et chimiques (13, 15) de l'air, et d'autre part une cartouche amovible de captation du dioxyde de carbone (27).

2. Dispositif selon la revendication 1, dans lequel lesdits moyens de traitement physique et chimique de l'air comprennent des filtres (11, 13, 15) disposés de manière concentrique ou successive, ladite turbine (21) est disposée à la sortie du volume cylindrique défini par ces filtres (11, 13, 15) et ladite cartouche amovible (27) est disposée en aval de ladite turbine (21).

3. Dispositif selon l'une des revendications 1 ou 2, comportant un ventilateur (31) adjacent à la cartouche (27), apte à prélever une partie du débit engendré par ladite turbine (21).

4. Dispositif selon la revendication 2, dans lequel lesdits moyens de traitement physique de l'air comprennent au moins un filtre à particules (11).

5. Dispositif selon la revendication 2, dans lequel lesdits moyens de traitement chimique de l'air comprennent au moins un filtre à matériau adsorbant (13, 15).

6. Dispositif selon la revendication 5, dans lequel ledit/lesdits matériau(x) adsorbant(s) est(sont) sélectionné(s) dans le groupe comprenant les adsorbants carbonés, les oxydes inorganiques, les polymères.

7. Dispositif selon l'une des revendications 5 ou 6, comprenant deux filtres à matériaux adsorbants (13, 15) disposés de manière concentrique ou successive.

8. Dispositif selon l'une quelconque des revendications 5 à 7, comprenant des moyens de génération de plasma disposés à l'intérieur ou à proximité ou en contact dudit filtre à matériau adsorbant (13, 15).

9. Dispositif selon l'une quelconque des revendications précédentes, comprenant au moins une source émettrice de rayons ultraviolets.

10. Dispositif selon l'une quelconque des revendications précédentes, comprenant un superviseur électronique (33) connecté à ladite turbine (21), audit ventilateur (31), auxdits moyens de génération de plasma et à une pluralité de capteurs de mesure de la qualité de l'air sortant dudit dispositif (7).
